# DEMANDE DE BREVET EUROPEEN

(11) **EP 2 123 854 A2**
(43) Date de publication de la demande: **25.11.2009**
(21) Numéro de dépôt: 09380101.7
(22) Date de dépôt: 19.05.2009
(51) Int. Cl.: E05B 65/08, E05C 9/04

(54) **Fermeture pour caisses de chargement dans des fourgons et analogues**

(30) Priorité: 20.05.2008 ES 200801511
(71) Demandeur: Carrocerias EGA, S.A., 31570 San Adrian (Navarra) (ES)
(72) Inventeur: Calvo Azcárate, Santiago, 31570 San Adrian (Navarra) (ES)
(74) Mandataire: Urizar Barandiaran, Miguel Angel

(57) **Abrégé**

Fermeture pour caisses de chargement dans des fourgons et analogues, avec une ou plusieurs portes coulissantes (1) pourvues de, au moins, un verrou (5) et qui, en position fermée, se trouve(nt) sur un même plan vertical que la cloison de la caisse de chargement (C) dans laquelle elle(s) se situe(nt).

Elle dispose de, au moins, un rail allongé (2) avec une zone de profil droit (A1) et de, au moins, une zone de profil courbe (A2) avec un rail (2) dans lequel est guidé au moins un support (S) associé à une porte coulissante (1), qui est adossée à la cloison de la caisse de chargement (C) alors qu'elle est guidée dans la zone de profil droit (A1) et restant dans le même plan vertical que la cloison de la caisse de chargement (C) alors qu'elle est guidée dans la zone de profil courbe (A2), se maintenant toujours sur un même plan horizontal.

## Description

Dans les techniques actuelles, les carrosseries ou les caisses fermées montées sur le châssis de véhicules se servent de portes conventionnelles d'ouverture par rotation qui, dans leur position ouverte, dans de nombreux cas ou lieux d'application, ne sont fonctionnellement pas conseillés ou ne sont pas utilisables (étant donné qu'elles requièrent un espace important autour de la carrosserie qu'elles ferment).

Les carrosseries ou les caisses montées sur le châssis de véhicules fermés avec des portes coulissantes qui se déplacent avec un guide dans des jeux rail-guide, avec an moins un supérieur et un autre inférieur, sont connues. Le Brevet espagnol P0437204, par exemple, se réfère à une caisse de chargement avec une porte coulissante de ce type pour des véhicules de transport de marchandises.

Le demandeur même est titulaire des Modèles d'Utilité U1025457 et U1055900, qui avaient surmonté ces limitations inhérentes aux portes d'ouverture avec rotation, préconisant une porte d'ouverture coulissante qui, dans la position ouverte, dépasse légèrement du volume de la carrosserie qu'elle ferme, et, en position fermée, prend une position coplanaire avec celui-ci.

Cette même philosophie (réussir à ce que les portes ou les panneaux de fermeture, en position ouverte, dépassent légèrement par rapport au volume de la carrosserie qu'ils ferment et, en position fermée, prennent une position coplanaire avec celui-ci) se maintient dans la fermeture de caisses de chargement objet de cette invention, qui se sert de deux portes coulissantes opposées qui permettent d'ouvrir latéralement totalement et de fermer sur un même plan horizontal, avec une plus grande simplification technique, requérant une seul rail guide pour les deux portes.

La fermeture pour caisses de chargement dans des fourgons et analogues, conformément à l'invention, ne requiert aucun déplacement vertical en forme de rampe des portes (comme dans le cas, par exemple, du Brevet P0437204 et du Modèle U1025457 mentionné) et, en conséquence, ne requiert pas de piste supérieure inclinée pour obtenir un tel déplacement latéral en forme de rampe.

L'objet de cette invention est une nouvelle fermeture pour caisses de chargement du type décrit, et, particulièrement, pour des camions, disposant sur leur châssis d'une caisse avec une porte coulissante qui, au minimum, en position fermée, se trouve sur le même plan qu'une cloison fixe de la caisse de chargement située à côté ou qu'une seconde porte coulissante, qui, en position fermée, est également située à côté et dans le même plan qu'une cloison fixe de la caisse de chargement. Elle est caractéristique car elle dispose d'une ou de différentes portes coulissantes présentant un verrou avec deux points d'ancrage qui, en position fermée se trouve(nt) sur un même plan que la cloison de la caisse de chargement dans laquelle elles se situent.

Chacune de ces portes dispose, au moins, d'un support associé, et se déplacent linéairement et toujours sur un même plan horizontal, car ces supports associés se déplacent avec un guide sur un rail allongé avec une zone de profil droit, et, au moins, une zone de profil courbe; de manière à ce que cette porte coulissante soit adossée à la cloison de la caisse de chargement car elles est guidée dans la zone de profil droit du rail et est disposée sur le même plan vertical que cette cloison de la caisse de chargement étant donné qu'elle est guidée sur la zone de profil courbe, tout cela en se maintenant à tout moment sur un même plan horizontal.

Plus concrètement, la fermeture pour caisses de chargement dans des fourgons et analogues, conformément à cette invention, se caractérise par le fait qu'elle dispose d'un rail allongé avec une zone centrale de profil droit, et que les extrémités correspondantes de profil courbe dans ce rail sont guidées avec au moins deux supports associés aux portes coulissantes opposées correspondantes ; de manière à ce que ces portes coulissantes soient adossées entre elles, étant donné que l'une d'elles est guidée dans la zone de profil droit du rail et que les deux sont disposées sur le même plan vertical que la cloison de la caisse de chargement, étant donné qu'elles sont guidées dans la zone de profil courbe, et cela se maintenant à tout moment sur un même plan horizontal.

Les deux portes coulissantes opposées se déplacent sur un même rail, en atteignant respectivement leurs positions ouvertes en alternance, de manière non simultanée. Les zones de profil courbe mentionnées sont constituées sur le troisième point d'ancrage des portes coulissantes correspondantes.

De plus, ce système dispose d'un ancrage dont la position fait face au profil courbe du rail mentionné, qui est constitué dans le quatrième point d'ancrage des portes coulissantes correspondantes.

Pour cela, la fermeture préconisée pour des caisses de chargement dans des fourgons et analogues constitue une nouvelle invention impliquant une activité inventive et pouvant être appliquée dans le secteur industriel.

Dans le but de mieux comprendre l'objet de la présente invention, une forme préférentielle de réalisation pratique est représentée sur les plans, pouvant être modifiée accessoirement, cela sans dénaturer son fondement.

La figure 1 représente une vue latérale schématique de l'élévation de la fermeture pour caisses de chargement dans des fourgons et analogues selon l'invention, disposé dans la carrosserie ou dans une caisse fermée (C) et avec deux portes coulissantes (1) opposées en position fermée.

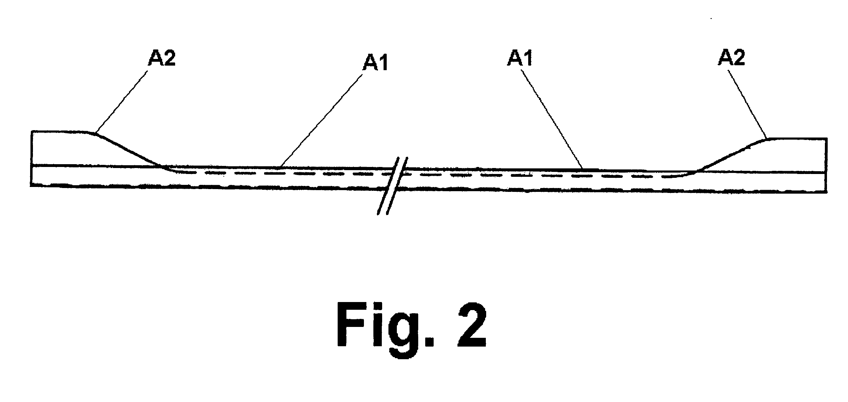

La figure 2 représente une vue schématique en plan du rail (2), avec une zone centrale de profil droit, (A1) et avec les extrémités correspondantes de profil courbe (A1).

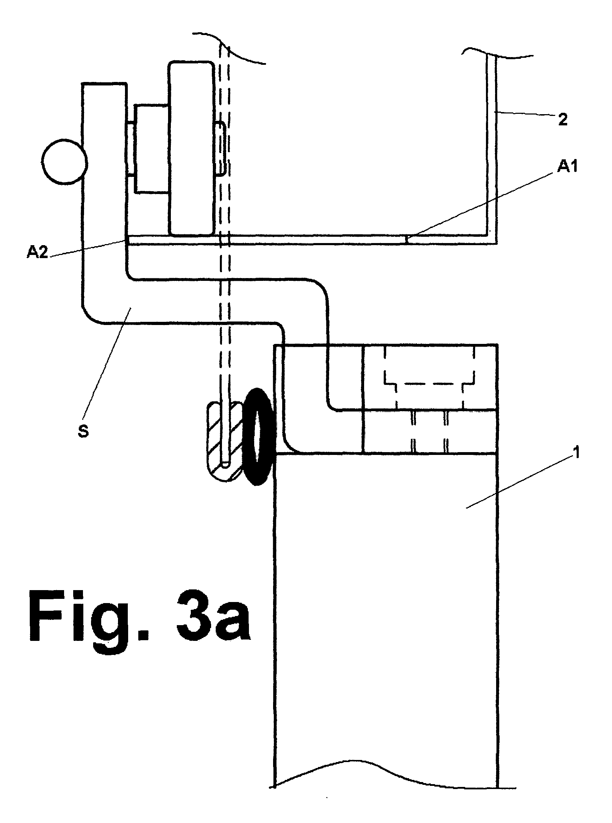

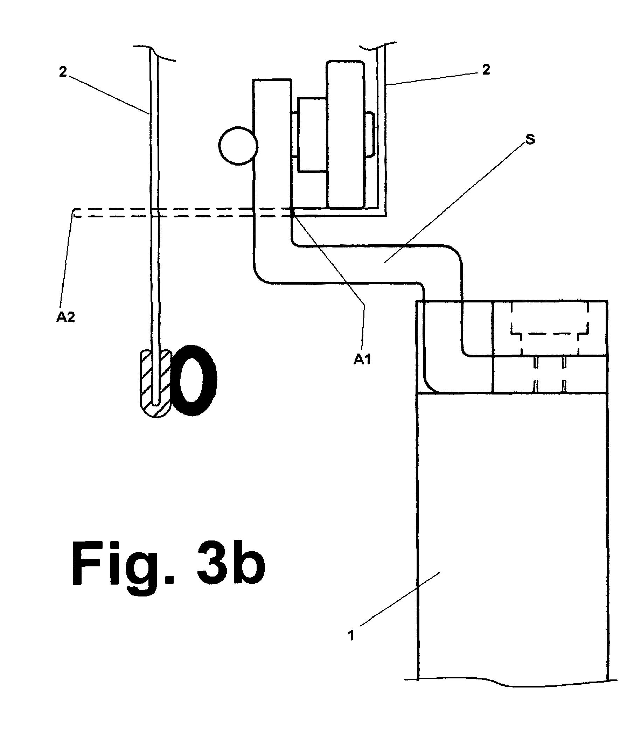

La figure 3 représente une coupe générale schématique profilée d'un rail-guide (2) avec le support (S) et la porte coulissante (1) en position fermée -figure 3a- et en position ouverte -figure 3b- en tant qu'exemple non limitatif de réalisation pratique.

Une partie de la géométrie du rail guide (2) a été omise, étant donné qu'elle n'a aucune importance aux effets de l'invention : il s'agit de la partie par laquelle le rail (2) est fixé à la caisse de chargement (C).

De même, la structuration concrète de l'ancrage (3), qui constitue, le cas échéant, le troisième point d'ancrage (P3) a aussi été omise, ainsi que la structuration concrète du verrou (5), étant donné qu'elle ne présente aucune importance aux effets de l'invention : toute solution connue peut être utilisée, sans pour cela modifier le fondement de l'invention.

Un exemple de réalisation pratique et non limitatif de la présente invention est décrit ci-dessous. D'autres méthodes de réalisation introduisant des modifications accessoires ne dénaturant pas son fondement ne sont en aucun cas écartées ; au contraire, la présente invention comprend aussi toutes ses variantes.

La présente invention se réfère à une fermeture pour caisses de chargement dans des fourgons et analogues et est applicable, en général, à tout véhicule industriel disposant de caisse de chargement (C) fermée par au moins une porte coulissante (1) qui, en position fermée, se trouve sur le même plan qu'une cloison fixe de la caisse de chargement (C) contiguë ou qu'une seconde porte coulissante (1) qui, en position fermée, est aussi contiguë et sur le même plan qu'une cloison fixe de la caisse de chargement (C).

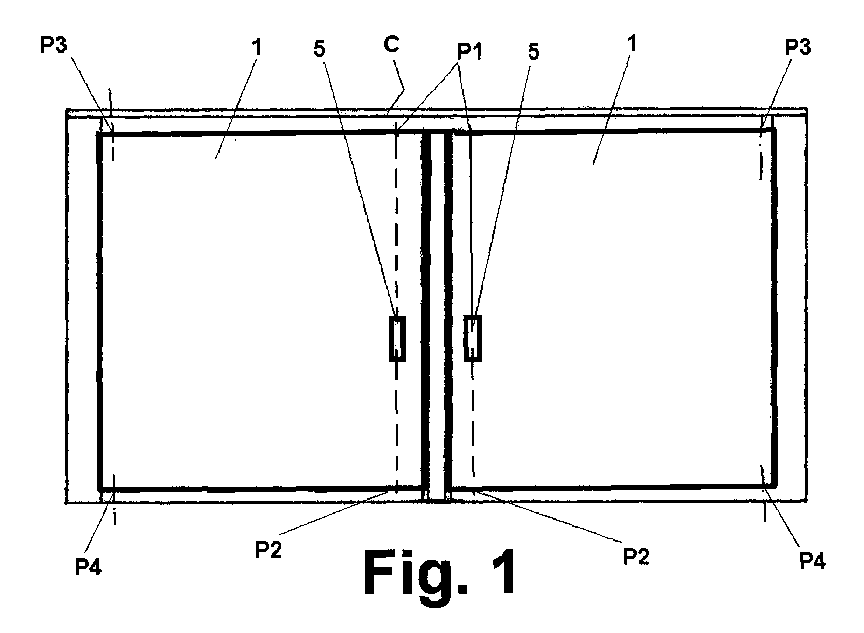

La fermeture selon la revendication est disposée en préférence en occupant tout ou une partie de, au moins, l'un des côtés de cette caisse de chargement (C) -voir figure 1- même s'il n'est pas écarté de la disposer entre les deux côtés et/ou sur la partie arrière de la caisse de chargement (C) sans modifier pour cela le fondement de l'invention.

Conformément à l'invention, la fermeture préconisée se compose, basiquement, d'un rail allongé (2) avec une zone de profil droit, (A1), et au moins, d'une zone de profil courbe (A1) avec un rail (2) dans lequel est guidé au moins un support (S) associé à une porte coulissante (1) de telle manière que cette porte coulissante (1) soit adossée à la cloison de la caisse de chargement (C) étant donné que celle-ci est guidée dans la zone de profil droit (A1) du rail (2) et est disposée sur le même plan vertical que la cloison de cette caisse de chargement (C) vu que celle-ci est guidée dans la zone de profil courbe.

Nous passons d'une position ouverte à une position fermée de la porte coulissante (1) par une simple poussée, qui provoque un glissement linéaire, maintenant toujours un même plan horizontal. Durant cette simple poussée, nous passons de la position ouverte à la position fermée de la porte coulissante (1) en modifiant son plan vertical (elle passe d'un plan vertical coplanaire avec la cloison de la caisse de chargement à un autre plan vertical adossé à celle-ci).

Plus concrètement, la fermeture objet de l'invention dispose basiquement d'un rail allongé (2) avec une zone central de profil droit (A1) et deux extrémités de profil courbe (A2), avec un rail (2) dans lequel se déplacent au moins de supports (S) associés aux portes coulissantes correspondantes (1) opposées. Toute réalisation pratique ne modifiant pas le fondement proposé est incluse dans l'objet de cette invention : par exemple, inclure plus de deux portes coulissantes (1), avec l'inclusion correspondante de plus de deux zones de profil courbe (A2) dans le rail (2).

Conformément à l'invention, les deux portes coulissantes (1) se déplacent de manière opposée dans le même rail (2), et ceci, bien sûr, en alternance : étant donné que les supports (S) respectifs occupent la zone de profil droit (A1) si une porte coulissante (1) est déplacée, l'autre ne le fait pas et vice-versa.

De cette manière :
- en position ouverte de l'une des portes coulissantes (1) ces portes (1) sont adossées entre elles étant donné que les supports (S) de l'une d'elles sont guidés dans la zone de profil droit (A1) du rail (2)
- en position fermée, les deux portes coulissantes (1) sont disposées sur le même plan vertical que la cloison de la caisse de chargement (C) étant donné que les deux sont guidées dans la zone de profil courbe (A2).

Dans toutes les positions, les deux portes coulissantes opposées (1) se maintiennent toujours sur un même plan horizontal.

Chaque porte (1) présente un verrou (5) qui comporte deux points d'ancrage (P1), (P2) pour la porte (1) correspondante.

Le profil courbe correspondant (A2) est constitué sur le troisième point d'ancrage (P3) pour la porte coulissante (1) correspondante.

Dans l'exemple de réalisation décrit, il a été prévu pour chaque porte coulissante (1) d'inclure un ancrage positionné face au profil courbe (A2) correspondant du rail (2) mentionné; de plus, cet ancrage de profil étant conjugué avec celui du profil courbe (A2). Cette solution constitue le quatrième point d'ancrage (P4) des portes coulissantes (1) correspondantes.

Avec cette structure, disposition et particularités, la fermeture pour caisses de chargement dans des fourgons et analogues selon l'invention, nous obtenons :
- en conformant ou en insérant le rail-guide (2) dans une cloison de la caisse de chargement (C), en occupant sa totalité ou une partie de celle-ci et de manière à ce que chaque profil courbe (A2) du rail (2) soit positionné en face d'un ancrage et sur un même plan ;
- en conformant ou en insérant chaque ancrage sur la cloison opposée de la caisse de chargement (C) en occupant une partie de celle-ci et de manière à ce que chacun soit situé en face d'un profil courbe (A2) du rail (2), mentionné ci-dessus ;
- en disposant un boulon-guide sur le bord correspondant de la porte coulissante (1) correspondante et dont la position est opérative pour qu'il s'embouche dans l'ancrage mentionné (point d'ancrage (P4) en même temps qu'un support (S) atteint la zone de profil courbe (A2) dans le rail (2) (point d'ancrage P3).
- en disposant des caissières (A3) dans la caisse de chargement (C) en face des goujons (1) du verrou (5) pour fixer la porte coulissante (1) correspondante à la caisse de chargement (C) dans sa position fermée (points d'ancrage P1, P2).

Il est indistinct et accessoire aux effets de l'invention d'utiliser une ou plusieurs portes coulissantes (1), que ces portes (1) soient ou non du même type, ou même qu'il y ait un ou plusieurs panneaux fixes ou des portions de caisse de chargement (C) sans porte, ceci ne modifiant en rien le fondement du modèle.

Les matériaux, dimensions, proportions, et, en général tous les autres détails accessoires ou secondaires n'altérant, ne changeant ou ne modifiant pas le fondement proposé pourront être variables.

Les termes utilisés pour rédiger ce mémoire sont certains et reflètent fidèlement l'objet décrit, et ceux-ci doivent être compris dans leur sens le plus large, ceci jamais de manière limitative.

## Revendications

1. Fermeture pour caisses de chargement dans des fourgons et analogues, avec une ou plusieurs portes coulissantes (1) pourvues, de, au moins, un verrou (5) avec deux points d'ancrage (P1), (P2) qui, en position fermée se trouve(nt) sur un même plan vertical que la cloison de la caisse de chargement (C) dans laquelle elles se situent ; **caractérisée par le fait qu'**elle dispose de, au moins, un rail allongé (2) avec une zone de profil droit (A1) et, de, au moins, une zone de profil courbe (A2) avec un rail (2) dans lequel est guidé pour se déplacer au moins un support (S) associé à une porte coulissante (1); de manière à ce que cette porte coulissante (1) soit adossée à la cloison de la caisse de chargement (C) étant donné qu'elle est guidée dans la zone de profil droit (A1) du rail (2) et qu'elle est disposée sur le même plan vertical que cette cloison de la caisse de chargement (C) vu qu'elle est guidée dans la zone de profil courbe (A2), tout cela en se maintenant à tout moment sur un même plan horizontal.

2. Fermeture pour caisses de chargement dans des fourgons et analogues, selon la revendication 1, **caractérisée par le fait qu'**elle dispose d'un rail allongé (2) avec une zone centrale de profil droit (A1) et des extrémités de profil courbe (A2) avec un rail (2) dans lequel sont guidés pour se déplacer au moins deux supports (S) associés aux portes coulissantes correspondantes (1) opposées; de manière à ce que ces portes coulissantes (1) soient adossées entre elles étant donné que l'une d'elles est guidée dans la zone de profil droit (A1) du rail (2) et que les deux sont disposées sur le même plan vertical que la cloison de la caisse de chargement (C) vu qu'elles sont guidées dans la zone de profil courbe (A2) tout cela en se maintenant à tout moment sur un même plan horizontal.

3. Fermeture pour caisses de chargement dans des fourgons et analogues, selon la revendication 2, **caractérisée par le fait que** les deux portes coulissantes opposées (1) se déplacent sur un même rail (2) en atteignant alternativement leurs positions ouvertes respectives, de manière non simultanée.

4. Fermeture pour caisses de chargement dans des fourgons et analogues, selon les revendications 1 et 2, **caractérisée par le fait que** les zones de profil courbe mentionnés (A2) du rail (2) sont constituées dans le troisième point d'ancrage (P3) des portes coulissantes correspondantes (1).

5. Fermeture pour caisses de chargement dans des fourgons et analogues, selon la revendication 2, **caractérisée par le fait qu'**elle dispose d'un ancrage en position opposée avec le profil courbe (A2) du rail mentionné (2) qui est constitué dans le quatrième point d'ancrage (P4) des portes coulissantes correspondantes (1).
